# EUROPÄISCHE PATENTSCHRIFT

(11) **EP 4 094 944 B1**
(45) Veröffentlichungstag und Bekanntmachung des Hinweises auf die Patenterteilung: **16.07.2025**
(21) Anmeldenummer: 21175490.8
(22) Anmeldetag: 23.05.2021
(51) Int. Cl.: B41F 33/00, H04N 1/60

(54) **VERFAHREN ZUR BESTIMMUNG EINES ÜBEREINSTIMMUNGSFAKTORS HINSICHTLICH DER FARBLICHEN ÜBEREINSTIMMUNG EINES ERSTELLTEN DRUCKERZEUGNISSES MIT VORGEGEBENEN SOLLWERTEN FÜR FARBEN**
METHOD FOR DETERMINING A MATCH FACTOR WITH RESPECT TO THE COLOUR MATCH OF A CREATED PRINT PRODUCT WITH PREDETERMINED SET VALUES FOR COLOURS
PROCÉDÉ DE DÉTERMINATION D'UN FACTEUR DE CORRESPONDANCE CONCERNANT LA CORRESPONDANCE DES COULEURS D'UN PRODUIT D'IMPRESSION CRÉÉ AVEC DES VALEURS PRÉDÉTERMINÉES POUR LES COULEURS

(43) Veröffentlichungstag der Anmeldung: 30.11.2022
(73) Patentinhaber: GMG GmbH & Co. KG, 72072 Tübingen (DE)
(72) Erfinder: TRÖSTER, Philipp, 80796 München (DE); JÜDE-LÖFFLER, Eva, 21033 Hamburg (DE); LEVINE, Marc, Duxbury, MA 01835 (US); YOUNG, Darrian, Oceanside, CA 92057 (US)
(74) Vertreter: Rausch, Michael

(56) Entgegenhaltungen:
- EP-A1- 3 163 861
- DE-A1- 102011 015 306
- DE-A1- 19 632 969

## Beschreibung

Die vorliegende Erfindung betrifft ein Verfahren zur Schaffung eines objektiven Bewertungsmaßstabes zur Bewertung von Druckerzeugnissen.

Heutiger Stand der Technik für die Erzeugung von Druckerzeugnissen umfasst im Wesentlichen das Folgende:
Nachdem ein Druckerzeugnis "gestaltet" ist, werden technische Randparameter festgelegt. Dazu gehört die Festlegung, auf welcher Druckmaschine schlussendlich das Druckerzeugnis gedruckt wird. Die Maschine wiederum gibt technische Randbedingungen vor. Beispielsweise verfügt sie über eine vorgegebene Anzahl von Farbwerken, d.h., sie kann eine bestimmte Anzahl von Farben verarbeiten. Darüber hinaus stehen die Farbwerke in einer vorgegebenen Reihenfolge, woraus sich auch ergibt, in welcher Weise Farben aufeinanderfolgend übereinander gedruckt werden können. Außerdem gibt die zu verwendende Druckmaschine automatisch das anzuwendende Druckverfahren vor, welches auch als "Zieldruckverfahren" bezeichnet wird. Beispielhaft kann dies ein Offsetdruckverfahren sein. Weiterhin wird festgelegt, auf welchem Träger das Druckerzeugnis erstellt werden soll.

Die Vorlage für das Druckerzeugnis selbst offenbart zunächst einmal, welche Endfarben erzielt werden sollen. In anderen Worten, eine bestimmte Anzahl von Farberscheinungen ergibt das Druckerzeugnis. Dieses kann beispielsweise in einzelne druckbare Punkte aufgeschlüsselt werden und für jeden einzelnen druckbaren Punkt kann festgelegt werden, welche Farbe er am Ende tragen soll. Diese pixelartige Verarbeitung ist üblich.

Diese als Endfarben bezeichneten Ergebnisse lassen sich technisch eineindeutig definieren. Sie haben beispielsweise einen eindeutigen spektralphotometrisch messbaren Wert.

Ebenfalls Stand der Technik ist das Wissen um die Zusammensetzung von Farben. Jedwede messbare Farbe lässt sich angeben aus der Mischung von wenigen Farben. "Mischung" im Sinne der vorliegenden Erfindung bedeutet nicht zwingend das Erstellen einer Mischung oder Suspension im Sinne des Zusammenkippen von Farben in bestimmten Anteilen, sondern es bedeutet in der Regel das Erzeugen einer "Endfarbe" durch das Überdrucken von vorgegebenen Farben in vorgegebenen Mengen und einer bestimmten Reihenfolge. Man spricht hier von der sogenannten Mischintention oder Farbintention.

Bekannte Druckfarbsysteme, beispielsweise definiert durch die Prozessfarben CMYK (Cyan, Magenta, Yellow, Black) sind inzwischen so weit erschlossen, dass messbare Farben in den jeweiligen Farbraum transferiert werden können. Durch das Übereinanderdrucken der Prozessfarben CMYK in einer vorgegebenen Reihenfolge und einem vorgegebenen prozentualen Anteil lässt sich ein Farbeindruck erzeugen, der einer vorgegebenen Farbe möglichst nahekommt.

Es wird hier offensichtlich, dass einerseits die Anzahl und Reihenfolge von Farbwerken in der Druckmaschine, mit welcher das Druckerzeugnis hergestellt werden soll, und andererseits die aus der Farbanalyse sich ergebenden Mischintentionen, das heißt die Vorgaben von Reihenfolge und Mengenanteilen von zur Verfügung stehender übereinander zu druckender Farben, aufeinander abgestimmt werden müssen.

Ein weiterer wesentlicher Aspekt, der die Erscheinung und die Qualität eines Druckerzeugnisses beeinflusst, ist, auf welcher Unterlage gedruckt werden soll. Das Druckpapier, die Frage, wie weiß es ist, etwaige Färbungen, Struktur, Saugverhalten und dergleichen können hier einen erheblichen Einfluss haben.

All die genannten Parameter wie Druckmaschine, Druckverfahren, Farbtypen, Farbanzahl, Druckpapier usw. werden als Druckprozessparameter bezeichnet. In der Praxis häufig verwendete Druckprozessparameter sind zum Teil in internationalen Normen standardisiert. Beispielsweise sind die Farbeigenschaften der Prozessfarben und die Einfärbungen der Papiere neben anderen Parametern für unterschiedliche Papierklassen in der ISO-Norm 12647-2 (Prozess-Standard Offsetdruck) für das Druckverfahren Offset festgelegt.

Sind für einen geplanten Druckvorgang die Druckprozessparameter festgelegt, wird ein das Druckerzeugnis repräsentierender Datensatz erzeugt, der von der vorgesehenen Druckmaschine zur Erzeugung des Druckerzeugnisses umgesetzt werden kann. Die Maschine druckt dann Bildpunkt für Bildpunkt die vorgesehenen Mengen von vorhandenen Farben in der entsprechenden Reihenfolge und erzeugt somit automatisch das gewünschte Erzeugnis.

Ein Druckvorgang kann messtechnisch erfasst werden, in dem die Farbmischungen, die auf dem Druckbogen abgedruckt worden sind, spektralphotometrisch vermessen werden. Damit ist dann das Reflektionsspektrum einer Farbmischung bekannt und somit der Farbeindruck definiert. In der Praxis werden häufig nur eine charakteristische Anzahl an Farbmischungen vermessen, um den zeitlichen Aufwand auf ein sinnvolles Maß zu begrenzen. Für die oben erwähnten standardisierten Druckbedingungen liegen solche Messungen häufig schon als Stand der Technik vor und sind entsprechend veröffentlich (z.B. FOGRA 51).

Für einen Druckvorgang mit gegebenen Druckprozessparametern und somit auch für einen Druckdatensatz, der für diese Druckbedingung erzeugt wurde, stehen somit spektralphotometrisch vermessene Sollwerte, also die Reflektionsspektren der einzelnen Farbmischungen zur Verfügung. Zur besseren Verständlichkeit und Anschauung werden die spektralen Sollwerte häufig in CIE-L*a*b* Werte umgerechnet. Dieses von der CIE Kommission definierte Farbsystem ordnet unterschiedliche Farbeindrücke in eine 3-dimensionalen Raum an. Das Koordinatensystem, dass dafür verwendet wird, definiert die einzelnen Farborte anhand ihrer Helligkeit (L*), ihrer Position auf einer grün-rot-Achse (a*) und ihrer Position auf einer blau-gelb-Achse (b*). Das Koordinatensystem ist per Definition so konstruiert, dass der euklidische Abstand in diesem Raum mit der menschlichen Wahrnehmung für Farbunterschiede korreliert. Liegen die Farborte zweier Farben in diesem Koordinatensystem eng zusammen, so sind sie für unser menschliches Wahrnehmungssystem kaum zu unterscheiden. Dies ist unabhängig davon, welche Farbmischung dabei zum Druck verwendet wurde. Anders ausgedrückt, es kann unterschiedliche Farbmischungen geben, die zu einem identischen oder nicht unterscheidbaren Farbeindruck im menschlichen Wahrnehmungssystem führen. Der wahrnehmbare Farbunterschied wird nach dem Stand der Technik häufig als sogenannter delta-E 76 Wert ausgedrückt. Dieser Wert bezeichnet eben den euklidischen Abstand im CIE-L*a*b* Raum. Aktuelle Entwicklungen gemäß dem Stand der Technik haben die Berechnung in der sogenannten delta-E 2000 Formel verbessert. Farbabstände, die anhand dieser Formel berechnet werden, entsprechen noch stärker dem Wahrnehmungsempfinden über alle Farbbereiche hinweg. Beispielsweise nehmen wir Farbunterschiede in den gelben Bereichen des CIE-L*a*b* System weniger stark wahr, als durch den Raumabstand dort beschrieben ist.

Zusammenfassend lässt sich sagen, dass gemäß dem Stand der Technik für einen Druckdatensatz, der für einen bekannten Satz an Druckprozessparametern definiert ist, für jede Farbmischung ein Sollwert, der dem menschlichen Farbeindruck entspricht, gemessen und damit festgelegt oder aus veröffentlichen Messungen abgelesen werden kann. Dieser Sollwert kann als Farbort in einem empfindungsgemäßen Koordinatensystem CIE-L*a*b* ausgedrückt werden.

Aus unterschiedlichsten Gründen kommt es vor, dass die Druckprozessparameter geändert werden müssen. So kann es beispielsweise sein, dass ein Druckprozess geändert werden muss. So kann organisatorisch vorgesehen sein, den Druck an einem anderen Ort, in einem anderen Land, auf einer anderen Maschine, nach einem anderen Verfahren und dergleichen vornehmen zu wollen oder zu müssen. Somit muss der das Druckerzeugnis repräsentierende Datensatz verändert, das heißt in der Regel transformiert werden. Hierfür gibt es verschiedene Verfahren, die in der Regel immer darauf hinauslaufen, dass Farbraumtransformationen durchgeführt werden. Durch diese Farbraumtransformation werden neue Farbmischungen für den geänderten Druckprozess beschrieben, die dem Farbeindruck der originalen Mischung der originären Druckbedingung entsprechen sollen. In der Praxis ergibt sich nun die Frage, wie nahe nach vorgenommener Transformation das Druckerzeugnis dem gewünschten Ergebnis kommt.

In den folgenden Ausführungen wird der Druckprozess mit den geänderten Druckprozessparametern als Zieldruckprozess bezeichnet, in dem Sinn als dieser Druckprozess das Ziel der Transformation darstellt und um ihn auch klar vom Quelldruckprozess, also dem originären Druckprozess mit seinem Satz an Prozessparametern abzugrenzen. In gleicher Weise wird von einem Quelldruckdatensatz und einem Zieldruckdatensatz gesprochen.

Im Stand der Technik ist es bekannt und üblich, das Ergebnis einer Transformation durch Vergleich mit der Vorlage zu überprüfen. Geht man davon aus, dass eine Vorlage existiert, die den Vorstellungen des Bedarfsträgers entspricht, kann man durch Messungen die Sollwerte für Farben des zu druckenden Quelldruckerzeugnisses in einem definierten Farbraum ermitteln. Man kennt auch die dem Sollergebnis zugrunde liegenden Quelldruckprozessparameter, also die Druckdaten. Ebenso bekannt sind die Druckprozessparameter des geplanten Zieldruckprozesses. Man wählt nun ein Transformationsverfahren aus, von welchen es in der Regel unterschiedliche gibt. Es folgt das Transformieren des Druckdatensatzes für das zu druckende Druckerzeugnis zur Verwendung im Zieldruckprozess unter Anwendung des festgelegten Transformationsverfahrens.

Ein Beispiel für eine derartige Vorgehensweise ist in der DE 10 2011 015 306 A1 beschrieben. In diesem Verfahren werden Testfelder mittels eines Referenzdruckprozesses gedruckt. Dabei handelt es sich um einen kalibrierten Druckprozess. Dann wird das entsprechende Testfeld mittels eines Spektralphotometers vermessen, so dass spektrale Ist-Daten erzeugt werden. Aus daraus densitometrisch, farbmetrisch oder spektral ermittelten Tonwertzunahmen für die einzelnen Druckfarben werden durch Interpolationsverfahren entsprechende Tonwertzunahme-Korrekturkurven ermittelt, die auf das Zieldruckverfahren angewendet werden können, um die Ziel-Grauchachse des Referenzdruckverfahrens zu erreichen. Es wird also ein Soll-IstVergleich zum Zwecke der Korrektur des Zieldruckverfahrens durchgeführt. Eine Bewertung des Transformationsverfahrens erfolgt nicht.

Erzeugt man nun einen Ausdruck des Druckerzeugnisses zusammen mit messbaren Feldern im Zieldruckprozess, kann man diese spektral vermessen, woraus sich die Istwerte ergeben. Man kann nun die Sollwerte mit den Istwerten vergleichen und somit eine Bewertung vornehmen.

Wiederholt man diesen Vorgang unter Verwendung eines anderen Transformationsverfahrens, kann man für den geplanten Prozess feststellen, welches Transformationsverfahren das geeignetste ist.

Zur Bewertung des Transformationsverfahrens stehen nach dem Stand der Technik bekannte Vorgehensweisen zur Verfügung. Sehr häufig wird mit einer visuelle Abmusterung das Transformationsverfahren bewertet. Dabei werden die Drucke eines Quelldatensatzes mit den transformierten und ebenfalls gedruckten Varianten aus dem Zieldruckprozess visuell verglichen und durch Experten bewertet. Dabei kommen bekannte und als geeignet eingestufte Motive zum Einsatz. Der Bilddatensatz "Roman 16" stellt einen Satz solcher Motive zur Verfügung. Charakteristisch für den Aufbau dieses Satzes an Motiven ist, dass in den einzelnen Abbildungen einzelne Farbbereiche dominieren. Dadurch ist es möglich, die Güte des Transformationsverfahrens in einzelnen Farbbereichen getrennt zu bewerten und ebenso die Güte in neutralen Grautönen im mittleren Helligkeitsbereich unabhängig von dunklen und gesättigten Tönen. Der Satz an Motiven kann auch noch um Motive erweitert werden, die den Einsatz von Sonderfarben, wie sie häufig im Verpackungsdruck zum Einsatz, kommen widerspiegeln. Auch hier lassen sich die Motive so aufbauen, das einzelne Güteaspekte getrennt bewertet werden können. Letztendlich ist eine solche Bewertung aber zeitintensiv, erfordert nicht selten eine größere Anzahl an Experten und ist stark subjektiven Kriterien der Beobachter unterworfen.

Wie oben ausgeführt lassen sich für einen Quelldruckdatensatz die Sollwerte spektralphotometrisch bestimmen und die entsprechenden Farborte im wahrnehmungsspezifischen CIE-L*a*b* festlegen. In gleicher Weise können Istwerte für den transformierten Zieldruckdatensatz ermittelt werden. Gemäß dem Stand der Technik lässt sich jetzt für jede einzelne Farbmischung der Unterschied in der Wahrnehmung durch einen delta-E 2000 Wert berechnen. Die Sichtbarkeitsschwelle wird im Allgemeinen mit Werten unter 1 angegeben, d.h. können für die Farbmischungen im Vergleich nur kleinere Werte als 1 festgestellt werden, so hat das Transformationsverfahren eine hohe Güte, dass der Zieldruckdatensatz sich nicht visuell vom Quelldatensatz unterscheidet. Dieses einfache Verfahren, ein Verfahren der statistischen Auswertung aller Farbunterschiede aller Farbmischungen stößt aber an seine Grenzen, wenn das Zieldruckverfahren durch seine physikalischen Eigenschaften nicht in der Lage ist, alle Farborte des Quelldruckdatensatzes abzubilden. Die Gesamtstatistik lässt sich dann auch nicht mehr durch ein theoretisch optimales Verfahren auf Werte unterhalb der Sichtbarkeitsschwelle drücken und somit verzerren einzelne oder auch mehrere größere Unterschiede die Statistik und damit die Vergleichbarkeit und Bewertbarkeit.

Als ein Beispiel hierfür sei ein Druck auf einen stark veränderten Zielbedruckstoff angeführt. Der Quelldatensatz war für eine hochweißes Bilderdruckpapier aufbereitet. Es wird nun auf einen braunen Karton gedruckt. Im Zieldruckprozess lassen sich somit nicht mehr alle hellen Farbmischungen des Quelldatensatzes erreichen. Selbst der unbedruckte Bereich weist bereits hohe sichtbare Unterschiede auf, die auch durch ein Transformationsverfahren nicht mehr aufgelöst werden können. Nach dem Stand der Technik kann in diesem Fall ein medienrelativer Vergleich durchgeführt werden. Dabei werden die zu erreichenden Sollwerte so transformiert, dass die Unterschiede im unbedruckten Zielbedruckstoff eliminiert werden. Die Bewertung der Güte des Transformationsverfahrens kann dann im Anschluss wieder mit statistischen Methoden erfolgen. Dieses Bewertungsverfahren ist beispielsweise im ProzessStandard Digitaldruck (PSD) der Fogra beschrieben. Aber auch das dem Stand der Technik entsprechende medienrelative Bewertungsverfahren weist erhebliche Schwächen auf, wenn der erreichbare Farbumfang des Zieldruckverfahrens noch weiter stark eingeschränkt ist. Als Farbumfang wird die Menge aller möglichen Farborte verstanden, die durch einen Satz an Druckprozessparametern erreichbar ist. Ein Beispiel für eine solche Einschränkung ist der oben erwähnte dunklere und/oder farbige Bedruckstoff. In diesem Fall ist der Farbumfang in diesem Bereich bereits stark limitiert. Können im Zieldruckprozess die Prozessfarben beispielsweise nicht mehr mit derselben Intensität aufgebracht werden oder nicht mehr in der gleichen Menge überdruckt werden, schrumpft der Umfang aller darstellbaren Farben weiter. Je geringer der Farbumfang des Zieldruckprozesses ist, desto mehr verliert die nur statistische Betrachtungen der Farbabstände nach der Transformation an Bedeutung. Es ist beispielsweise möglich, viele Farborte eines Quelldruckdatensatzes in einem einzigen Farbort im Zieldruckdatensatz abzubilden, wenn der Zieldruckdatensatz diese Farborte nicht in seinem Farbumfang enthält. Statistisch betrachtet kann eine solche Transformation einen kleineren Gesamt- oder auch Durchschnittsfehler aufweisen und somit eine Transformation in Bezug auf ihre Güte besser bewerten als eine alternative Transformation, die in diesem Fall die Unterscheidbarkeit der Farborte des Quelldruckdatensatzes erhält, aber damit zu einem höheren Fehler in Bezug auf die reinen Betrachtungen der Abweichung führt. Ein Experte, der wie weiter oben beschrieben, eine visuelle Bewertung der Transformation vornimmt, würde in diesem Fall die alternative Transformation als besser einstufen. Hier sind also die nach aktuellem Stand der Technik bekannten objektiven Verfahren in ihrer Bewertung einem Experten unterlegen.

Ausgehend vom vorbeschriebenen Stand der Technik besteht ein erheblicher Bedarf darin, eine möglichst messbare und objektive Bewertung von Druckerzeugnissen nach Änderung des das Druckerzeugnis repräsentierenden Datensatzes ermitteln zu können, um den Abstand zur Vorgabe ebenfalls konkret bewerten zu können, wobei individuelle Einflüsse und subjektive Bewertungseindrücke weitgehend ausgeschlossen werden können. Das Verfahren muss dabei auch Zieldruckprozessparameter in seiner Bewertungsaussage sinnvoll einschließen, die einen erheblich geringeren Farbumfang in Bezug auf den Quelldruckdatensatz aufweisen.

Aufgabe der vorliegenden Erfindung ist es, ein Verfahren bereitzustellen, um einen Übereinstimmungsfaktor hinsichtlich der farblichen Übereinstimmung eines erstellten Druckerzeugnisses mit vorgegebenen Sollwerten für Farben zu bestimmen.

Zur Lösung dieser Aufgabe wird ein Verfahren mit den Merkmalen des Patentanspruches 1 vorgeschlagen. Weitere Vorteile und Merkmale der Erfindung ergeben sich aus den Unteransprüchen.

Ausgangspunkt ist ein eindeutig identifiziertes Druckerzeugnis, welches hinsichtlich der endgültigen Farberscheinung eindeutig festgelegt ist. Üblicherweise wird für jeden einzelnen Bildpunkt die Farberscheinung in einem wahrnehmungsspezifischen und drucktechnisch unabhängigen Farbsystem angegeben. Ein solches geeignetes Farbsysteme ist beispielsweise das CIEL*a*b*-System. Für dieses eindeutig identifizierte Druckerzeugnis gibt es einen Druckdatensatz.

Nur nebenbei sei hier bemerkt, dass gängige Druckprozesse in Bezug auf ihre Druckprozessparameter, wie Papier, Farben, Farbreihenfolgen und dergleichen häufig standardisiert sind. Für diese standardisierten Druckprozesse sind häufig idealisierte Werte für die Farberscheinung veröffentlich. Beispielsweise der Datensatz FOGRA51 für den Offsetdruck auf Bilderdruckpapier der Klasse 1 der ISO-Norm 12647-2.

Üblicherweise wird nun das Zieldruckverfahren festgelegt und ein Transformationsverfahren ausgewählt. Diese Vorgänge werden von mit dem Druck befassten Personen umgesetzt. Das Zieldruckverfahren ist meist aufgrund von Verfügbarkeit, organisatorischen oder auch gestalterischen Motiven weitgehend vorgegeben. Es bieten sich dann verschiedene Transformationsverfahren an, um die vorliegenden Druckdaten in die für den geplanten Druck im Ausgangs-Druckverfahren erforderlichen Druckdaten zu transformieren. Anschließend wird der Druck durchgeführt und das Ergebnis zur Ermittlung von Ist-Werten vermessen. So wie die Sollwerte, werden auch die Istwerte spektralphotometrisch gemessen und CIEL*a*b*-Farbsystem überführt.

Nach der Erfindung wird nunmehr eine Farbwert-Achse gebildet. Zu diesem Zweck wird eine Achse von einem eindeutigen Farbwert (Startpunkt) zu einem zweiten eindeutigen Farbwert (Endpunkt) unter gleichzeitiger Festlegung der zwischen beiden Farbwerten gewählten Stützstellen festgelegt. Dies erfolgt ebenfalls durch eine mit dem Druck befasste Person unter Nutzung eines Rechners, dem die entsprechenden Daten zur Verfügung stehen. Diese Auswahl kann auch bereits im Zusammenhang mit der Auswahl des eindeutig identifizierten Druckerzeugnisses getroffen werden.

Aus der Menge der Sollwerte für das eindeutig identifizierte Druckerzeugnis werden nun durch einen Rechner automatisch die Sollwerte für den Startpunkt, den Endpunkt und die Stützstellen bestimmt. Aus der Menge der Messwerte für das im Zieldruckverfahren gedruckte und vermessene Erzeugnis werden vom Rechner die Istwerte für den Startpunkt, den Endpunkt und die Stützstellen entnommen. Automatisch kann nun der Abstand von Sollwert und Istwert für jeden der Start-, Endpunkte und Stützstellen ermittelt und damit ein diesen Abstand repräsentierender Abstandswert bestimmt werden. Der Abstand wird in dieser ersten Auswertung vorteilhafterweise mit delta-E 2000 Formel bestimmt, da diese der menschlichen Wahrnehmung am nächsten kommt.

Es kann nun ein Übereinstimmungsfaktor als statistischer Mittelwert aus den Abstandswerten errechnet und ausgegeben werden. Gemäß der Erfindung werden hier prozentuale Angaben verwendet. So kann ein einzelner Abstandswert als Prozentwert ausgedrückt werden. Stimmen Sollwert und Istwert vollständig über ein, liegt die Übereinstimmung bei 100 %. Entsprechend können Abweichungen als prozentualer Wert angegeben werden. Über die Farbwertachse lassen sich nun die als Prozentwert vorliegenden Abstände mitteln, sodass sich ein Wert ergibt. Dieser repräsentiert die farbliche Übereinstimmung des erstellten Druckerzeugnisses mit vorgegebenen Sollwerten für Farben.

Als nächster Schritt der Erfindung wird nun eine Koordinatentransformation der Messwerte durchgeführt. Diese Koordinatentransformation bildet die jeweiligen Startpunkte der Farbachsen ebenso aufeinander ab, wie die Endpunkte der Farbachsen. Die dazwischen liegenden Stützstellen werden durch die gleiche Überführungsvorschrift verändert. Nun kann für die Stützstellen in den so transformierten Koordinaten der euklidische Abstand der Punkte ermittelt werden. Die Abstände lassen sich in gleicher Weise in eine prozentuale Schreibweise überführen und mitteln. Es entsteht ein weiterer Übereinstimmungsfaktor. Dieser bewertet inwiefern Farbabstände zwischen den Stützstellen entlang der Farbachse in dem Zieldruckerzeugnis durch die zu bewertende Farbraumtransformation erhalten wurden. Werden die beiden Übereinstimmungsfaktoren für die Farbachse gemittelt so ergibt sich ein Endwert, der sowohl die farbliche Übereinstimmung des erstellten Druckerzeugnisses mit vorgegebenen Sollwerten als auch die Erhaltung der ursprünglichen Farbabstände zwischen den Stützstellen der Farbachse beschreibt. Insbesondere dieser Aspekt, der die auch sogenannte Modulation der Farben des Druckerzeugnisses bewertet ist maßgeblich für eine objektive Bewertung des Transformationsverfahrens und das daraus entstandene Druckerzeugnis im Zieldruckprozess. Da ein bestimmtes Transformationsverfahren verwendet wurde, ergibt sich nunmehr die Möglichkeit, einen objektiven Vergleich zwischen unterschiedlichen Transformationsverfahren vornehmen zu können. Ergibt die gleiche Vorgehensweise unter Verwendung eines anderen Transformationsverfahrens einen anderen Übereinstimmungsfaktor, liegt damit ein objektives Maß für die Eignung des Transformationsverfahrens für die Transformation von Druckdaten in Bezug auf den konkreten Zieldruckprozess.

Derartige Erkenntnisse lassen sich in Datenbanken speichern und abrufen, woraus sich für zukünftige Druckprozesse die jeweils geeigneten Transformationsverfahren gezielt auswählen lassen.

Gemäß einer Weiterbildung der Erfindung lassen sich weitere Farbachsen bilden und nach dem oben beschrieben Verfahren auswerten. Dadurch ist es möglich alle maßgeblichen Farbbereiche des Druckerzeugnisses in die Bewertung mit aufzunehmen, in dem für die jeweiligen Farbbereiche eigene Achsen mit geeigneten Start- und Endpunkten und den entsprechenden Stützstellen gebildet werden. Für das Beispiel der "Roman 16" Motive lassen sich die jeweils in den Motiven dominierenden Farben wie dort bereits vorgegeben, auf die Achsen legen und dann nach dem in der Erfindung vorgeschlagenen Verfahren bewerten.

Weiterhin lassen sich gemäß einer weiteren Weiterbildung der Erfindung die Übereinstimmungsfaktoren aller Farbachsen in einen Übereinstimmungsfaktor überführen. Dabei ist es gemäß einer weiteren Weiterbildung der Erfindung vorteilhaft unterschiedliche Farbbereiche unterschiedlich zu gewichten. In gleicher Weise kann das Gewicht, dass bei der Ermittlung des Übereinstimmungsfaktors pro Farbachse für die beiden Werte dort angesetzt wird, je nach Farbbereich verändert werden. Dies erlaubt beispielsweise bei einer grauen Farbachse die Modulation stärker zu gewichten, hingegen im Rotbereich die farbliche Übereinstimmung stärker zu gewichten. Das Schema, mit dem die Gewichte über die unterschiedlichen Farbachsen verteilt werden, erlaubt eine objektive und klar definierte Bewertung des Druckerzeugnisses.

Anstelle einer willkürlichen Überprüfung von Soll-/Ist-Vergleichen erfolgt nun eine gezielte Ermittlung eines Wertes durch eine konkrete Vorgabe einer Überprüfungsmenge.

Als Druckerzeugnisse eignen sich wie bereits gesagt, die eingangs genannten und beschriebenen Standardvorlagen, beispielsweise die auf dem Prozessfarben basierenden "Roman 16"-Motive. Diese Vorlagen können nun auch nach dem erfindungsgemäßen Verfahren zur Festlegung eines Übereinstimmungsfaktors verwendet werden.

Gemäß einer besonders vorteilhaften Weiterbildung der Erfindung können Vorlagen gestaltet werden, die auch Sonderfarben in die Gestaltung des Quelldruckerzeugnisses mit einbeziehen. So können beispielsweise die Prozessfarben CMYK ergänzt werden um eine oder mehrere definierte weitere Farben. So sind beispielsweise Pantone-Farbbereiche bekannt, zu denen eindeutige Sollwerte vorliegen. Entsprechend lassen sich Vorlagen für Druckerzeugnisse entwickeln, die bei Anwendung des erfindungsgemäßen Bestimmungsverfahrens konkrete Aussagen über die Eignung eines bestimmten Transformationsverfahrens für bestimmte Druckprozesse treffen lassen. So kann beispielsweise bei der Verwendung bestimmter Braun-Töne im Verpackungsdruck auf einem bestimmten Maschinentyp die Anwendung nur bestimmter Transformationsverfahren ermittelt werden. Die Möglichkeit die Transformation von Sonderfarben aus dem Quelldruckverfahren in das Zieldruckverfahren bewerten zu können ist insbesondere dann von großer Wichtigkeit, wenn es sich hier um ein digitales Druckverfahren handelt. Innerhalb von digitalen Druckverfahren werden sehr häufig keine Sonderfarben eingesetzt, sondern ein erweiterter fester Satz an Farben. Beispielsweise werden dort die Prozessfarben CYMK um Orange und Grün ergänzt. Daraus ergibt sich das die Sonderfarben zwingend durch das Transformationsverfahren verändert werden. Insofern ist die Bewertung anhand des erfindungsgemäßen Übereinstimmungsfaktor sehr wichtig, da auch hier die Güte des im Zieldruckprozess erstellen Druckerzeugnisses nicht nur von der farblichen Übereinstimmung der Sonderfarbe abhängt, sondern auch deren Farbabstufungen ein wesentliches Kriterium für die Qualität darstellen.

Mit der Erfindung wird ein Verfahren vorgeschlagen, welches die Bestimmung eines von individuellen oder subjektiven Einflüssen unabhängigen Übereinstimmungsfaktors ermöglicht. Dieser Faktor gibt Auskunft über die farbliche Übereinstimmung eines Druckerzeugnisses gegenüber einer eindeutig identifizierten und farblich festgelegten Vorlage. Da die Druckdaten der Vorlage zur Ausgabe des Druckerzeugnisses im Zieldruckverfahren durch die Verwendung eines Daten-Transformationsverfahrens transformiert wurden, gibt der Übereinstimmungsfaktor einen Wert für die Eignung des Transformationsverfahrens für den konkreten Druckprozess an.

Damit können Druckverfahren zukünftig schnell und gezielt optimiert werden, indem das jeweils geeignete Transformationsverfahren verwendet wird. Dabei können die verwendeten Farben, Basissysteme und Sonderfarben, Überdruckvorschriften und Mischintentionen, die Druckträger und deren Farben, des Druckverfahren, die Druckmaschine und so weiter Berücksichtigung finden. Hat man also zukünftig ein beliebiges Druckerzeugnis, reproduziert durch die Druckdaten in Bezug auf einen bestimmten Druckprozess vorliegen, so lässt sich das jeweils geeignete Transformationsverfahren identifizieren, um dieses Druckerzeugnis in einem abweichenden Druckprozess erzeugen zu können, wobei eine größtmögliche Farbidentität oder Farbtreue erzielt wird.

Das erfindungsgemäße Verfahren wird nach Erfassung der Vorgaben automatisch durchgeführt und erzeugt automatisch einen Endwert in Form des Übereinstimmungsfaktors. Es löst die technische Aufgabe, einen verlässlichen und von individuellen und subjektiven Einflüssen freien Bewertungsmaßstab zu erhalten, um Entscheidungen über anzuwendende Verfahren fundiert treffen zu können.

Weitere Vorteile und Merkmale der Erfindung ergeben sich aus der folgenden Beschreibung anhand der Figuren. Dabei zeigen:
- Figur 1: eine beispielhafte Darstellung eines Druckerzeugnisses umfassend Prozessfarben CMYK und Sonderfarben sowie die Patchfelder als Grundlage für Sollwerte;
- Figur 2: eine schematische Darstellung eines dreidimensionalen CIEL*a*b* - Koordinatensystems mit Farbachsen;
- Figur 3: eine schematische Darstellung einer Normierung für die Abstandsermittlung und
- Figur 4: eine beispielhafte Darstellung für ein Ergebnis einer Bestimmung eines Übereinstimmungsfaktors.

Wie bereits dargelegt ist die industrieübliche Formel, die zur Bestimmung von Farbunterschieden herangezogen wird, die DeltaE-Formel. Diese Formel beschreibt den euklidischen Abstand im sogenannten CIEL*a*b*-Farbraum, bzw die verbesserte Formel DeltaE 2000 Wenn zwei Punkte in diesem Raum so nahe beieinander liegen, dass ihr Abstand kleiner als eins ist (DeltaE < 1), so sind sie visuell nicht mehr unterscheidbar. Reproduziert man nun ein Motiv, dessen Pixel ausgedrückt als Lab-Werte den Referenz-Datensatz darstellen, auf einem anderen Ausgabesystem (anderer Drucker, anderes Format, andere Tinten etc.), entsteht ein Prüfdatensatz aus CIEL*a*b*-Werten. Wird jeder Pixel bis auf DeltaE < 1 reproduziert, ist kein visueller Unterschied zwischen Original und Reproduktion wahrzunehmen und man erhält eine optimale Reproduktion.

Das Ausgabesystem definiert allerdings meist physikalische Rahmenbedingungen, die eine solche optimale Reproduktion unmöglich machen. Das beste Beispiel ist hierbei ein Substrat, das eine andere Färbung wie die Referenz aufweist. Druckt man beispielsweise ein Motiv auf gelbes Zeitungspapier, ist für viele Pixel eine exakte Reproduktion des CIEL*a*b*-Wertes, also ein DeltaE < 1, unmöglich. Somit kann die DeltaE-Formel zwar anzeigen, dass man keine identische Reproduktion erreichen kann, aber sie bietet kein Maß für eine optimale Reproduktion innerhalb der physikalischen Rahmenbedingungen auf einem bestimmten Ausgabesystem. Eine solche Formel wurde durch GMG entwickelt.

Es ist zu ermitteln, inwieweit die räumlichen Beziehungen, in denen die Pixel des Referenzdatensatzes zueinanderstehen, im Prüfdatensatz reproduziert werden. Hierfür werden ausgewählte Farbwerte (diese sind als Messfelder neben den Bildern angeordnet) aus dem Referenzdatensatz, sowie die entsprechenden Werte aus dem Prüfdatensatz einer Transformation in ein neues Koordinatensystem unterzogen. Hierbei werden zwei Punkte ausgewählt, die im neuen Koordinatensystem auf den Ursprung, bzw. auf den Punkt (x = 100, y = 0, *z* = 0) abgebildet werden. Alle anderen Punkte werden einer entsprechenden Transformation in diesen neuen dreidimensionalen Raum unterzogen. In diesem lassen sich nun die relativen Abstände zwischen Referenz- und Prüfdatensatz sowohl messen, als auch visuell darstellen. Die Metrik ist so konzipiert, dass, wenn alle Punkte nach der Transformation aufeinander liegen, der bestmögliche Prüfdatensatz erreicht wurde, da die relativen Räumlichen Beziehungen erhalten wurden. Abweichungen von dieser optimalen Darstellung können nun wiederum als euklidischer Abstand in diesem neuen Raum zwischen den einzelnen Referenzpunkten und ihrer Reproduktion (dem Prüfdatensatz) angegeben werden.

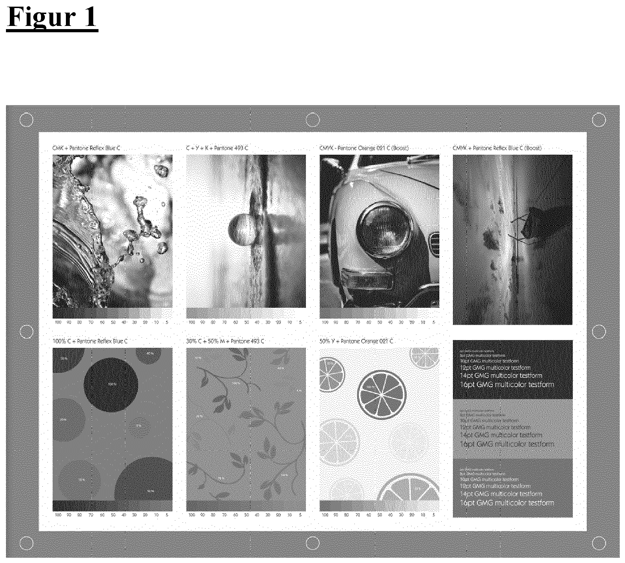

Figur 1 zeigt beispielhaft Vorlagen, die aus Kombinationen von Prozessfarben CMYK und eindeutig identifizierten Sonderfarben gebildet sind. Die Messfelder der einzelnen Darstellungen repräsentieren die für dieses Bild relevanten Farbbereiche und somit die gebildeten Achsen. Diese repräsentieren die Sollwerte für die jeweiligen Farben. Für jedes der Bilder existiert ein eindeutiger Druckdatensatz, der anwendungsgemäß unter Verwendung eines Transformationsverfahrens in den gewünschten Zieldruckprozess transformiert wird. Die transformierten Daten werden dann in dem Zieldruckprozess gedruckt und die Messfelder entsprechend spektralphotometrisch vermessen. Daraus ergeben sich die Istwerte.

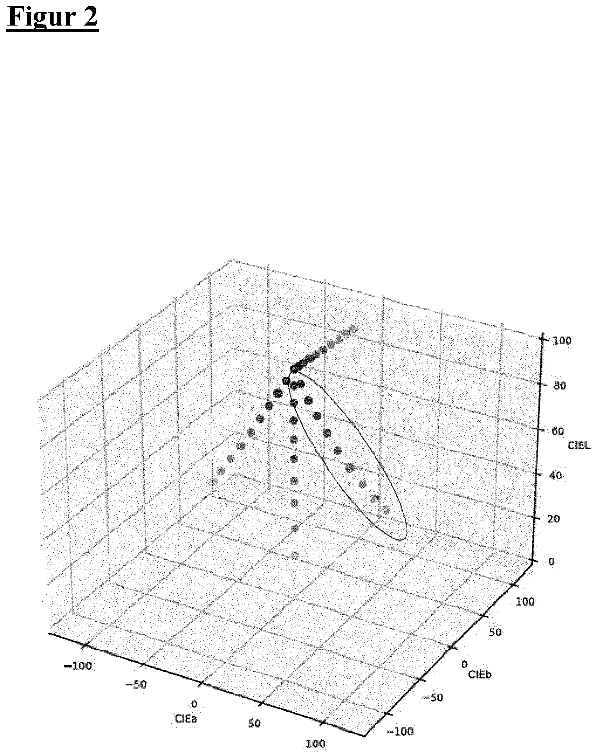

Figur 2 zeigt ein dreidimensionales CIEL*a*b* basiertes Koordinatensystem zur Darstellung der Farbachsen für unterschiedliche Farbbereiche. Für jede der Farbachsen sind ein Startpunkt, ein Endpunkt und dazwischen liegende Stützstellen festgelegt. In dieses Koordinatensystem werden zum einen die Sollwerte, zum anderen die Istwerte einer jeden Farbachse positioniert. Die Abstände können wie oben beschrieben als euklidischer Abstand in diesem Raum zwischen den einzelnen Referenzpunkten einerseits und ihrer Reproduktion andererseits angegeben werden.

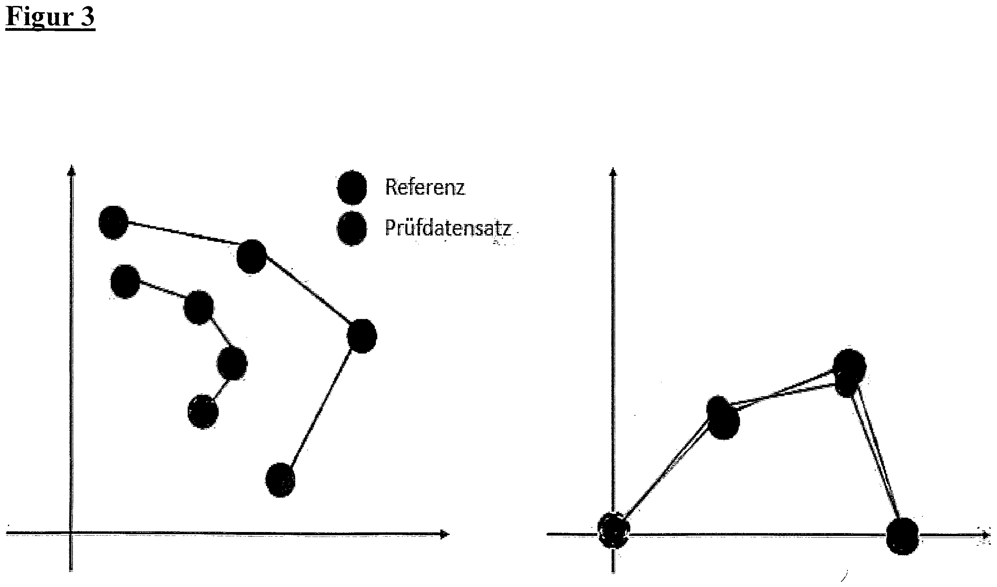

Dieses Prinzip ist in Figur 3 dargestellt. Auf der linken Seite ist der Referenzdatensatz in blau im CIEL*a*b* -Farbraum dargestellt. Dieser muss auf einem Ausgabesystem reproduziert werden, das durch physikalische Limitationen einen kleineren Farbraum hat und dadurch einen sichtbaren Farbunterschied (DeltaE >> 1) erzwingt. Der Prüfdatensatz ist in Rot dargestellt.

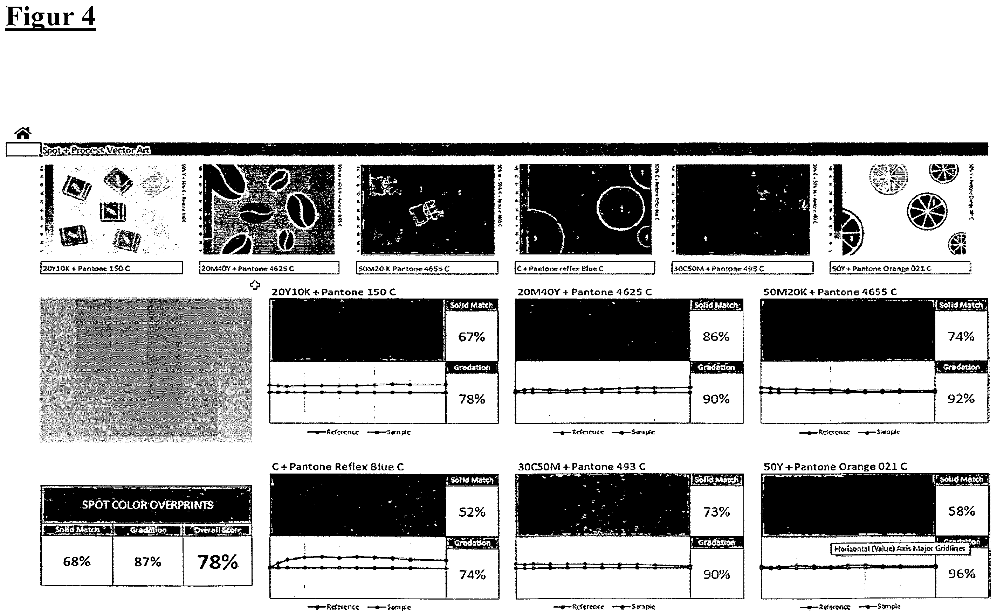

Auf der rechten Seite ist erkennbar, wie man durch eine Normierung des Punktes oben links auf den Koordinatenursprung, und des Punktes unten rechts auf die Koordinaten x=100, y=0, eine Darstellung erreicht, die zeigt wie gut die relativen räumlichen Beziehungen erhalten sind. Figur 4 zeigt das Ergebnis der erfindungsgemäßen Vorgehensweise. Für die einzelnen Farbbereiche anhand der Drucke von eindeutig identifizierten Vorlagen lassen sich die Abstände als prozentuale Werte angeben. Es ergeben sich unterschiedliche Werte je nachdem, ob die Werte absolut als Abstand über die gesamte Farbachse oder relativ nach einer Normierung ausgewertet werden. Die einzelnen Werte der Farbbereiche lassen sich nun zu einem Gesamtwert zusammenfassen, der sich im Fall des vorliegenden Beispiels mit 86 % ergeben hat. Dieser Wert repräsentiert den Übereinstimmungsfaktor, der sich bei Anwendung des gewählten Transformationsverfahrens für die Erzeugung eines Druckerzeugnisses in einem bestimmten Zieldruckprozess ergibt. Wird nun die gleiche Vorgehensweise unter Anwendung eines anderen Transformationsverfahrens wiederholt, ergeben sich eindeutige und vergleichbare Endwerte, die eine objektive Auswahl des geeigneten Verfahrens ermöglichen.

## Patentansprüche

1. Verfahren zur Bestimmung eines Übereinstimmungsfaktors hinsichtlich der farblichen Übereinstimmung eines erstellten Druckerzeugnisses mit vorgegebenen Sollwerten für Farben, umfassend die folgenden Schritte:
a) Ermitteln der Sollwerte für Farben des zu druckenden Druckerzeugnisses in einem definierten Farbraum in einem Quelldruckprozess,
b) Identifizieren des für einen auf gegenüber dem Quelldruckprozess geänderten Druckprozessparametern basierenden Zieldruckprozess vorgegebenen Druckdatensatzes,
c) Transformieren des Druckdatensatzes für das zu druckende Druckerzeugnis zur Verwendung im Zieldruckprozess unter Anwendung eines festgelegten Transformationsverfahrens,
d) Erzeugen eines Ausdruckes des Druckerzeugnisses zusammen mit Messfeldern dieses Druckes im Zieldruckprozess,
e) spektral Vermessen der Messfelder des Ausdruckes gemäß d) zur Erfassung der Istwerte,
f) Vergleichen der Sollwerte mit den Istwerten,
**gekennzeichnet durch** die aufeinanderfolgenden Schritte:
g) Festlegen einer Farbwert-Achse von einem eindeutigen Farbwert als Startpunkt zu einem zweiten eindeutigen Farbwert als Endpunkt unter gleichzeitiger Festlegung der zwischen beiden Farbwerten liegenden Stützstellen,
h) Bestimmen der Sollwerte für den Startpunkt, den Endpunkt und die Stützstellen,
i) Bestimmen der Istwerte für den Startpunkt, den Endpunkt und die Stützstellen,
j) Ermitteln eines den Abstand von Sollwert und Istwert für jeden der Start-, Endpunkte und Stützstellen repräsentierenden Abstandswertes,
k) Errechnen und Ausgeben eines Übereinstimmungsfaktors in Form prozentualer Angaben als statistischen Mittelwert aus den Abstandswerten.

2. Verfahren nach Anspruch 1, **dadurch gekennzeichnet, dass** Start- und Endpunkte sowohl der Sollwerte als auch der Istwerte durch eine Normierung in Deckung gebracht werden, woraus sich eine Transformationsvorschrift ergibt, und die Stützstellen sowohl der Sollwerte als auch der Istwerte der gleichen Transformation unterzogen werden, wobei die sich ergebenden Abstände der Istwerte von den Sollwerten der Stürtzstellen als Abstandswerte zur Bestimmung des Übereinstimmungsfaktors herangezogen werden.

3. Verfahren nach wenigstens einem der vorhergehenden Ansprüche, **dadurch gekennzeichnet, dass** für ein Druckerzeugnis eine Mehrzahl von Farbachsen festgelegt und nach den Schritten h) bis k) bearbeitet werden.

4. Verfahren nach Anspruch 3, **dadurch gekennzeichnet, dass** aus einer Mehrzahl von Übereinstimmungsfaktoren statistisch ein resultierender Faktor gebildet wird.

5. Verfahren nach wenigstens einem der vorhergehenden Ansprüche, **dadurch gekennzeichnet, dass** als Druckerzeugnis ein solches ausgewählt wird, welches die Prozessfarben CMYK umfasst.

6. Verfahren nach wenigstens einem der vorhergehenden Ansprüche, **dadurch gekennzeichnet, dass** als Druckerzeugnis ein solches ausgewählt wird, welches ein Spektrum einer Sonderfarbe aufweist.

7. Verfahren nach wenigstens einem der vorhergehenden Ansprüche, **dadurch gekennzeichnet, dass** ermittelte Übereinstimmungsfaktoren zusammen mit den Informationen über das Druckverfahren, die Farbanzahl und Farbauswahl und dem jeweiligen Datenbehandlungsverfahren zur Aufbereitung der Druckwerte in einer Datenbank abrufbar abgelegt werden.

8. Verfahren nach Anspruch 7, **dadurch gekennzeichnet, dass** für ein geplantes Druckvorhaben die Auswahl eines geeigneten Datenbehandlungsverfahrens zur Aufbereitung der Druckwerte durch Auswertung der Datenbank-Informationen erfolgt.

## Claims

1. Method for determining a conformity factor with regard to the colour conformity of a printed product with specified target values for colours, comprising the following steps:
a) Determining the target values for colours of the printed product to be printed in a defined colour space in a source printing process,
b) identifying the print data set specified for a target printing process based on printing process parameters that have been changed with respect to the source printing process,
c) transforming the print data set for the printed product to be printed for use in the target printing process using a specified transformation method,
d) Generating a printout of the printed product together with measurement fields of this print in the target printing process,
e) Spectrally measuring the measurement fields of the printout according to d) to record the actual values,
f) Comparing the target values with the actual values,
**characterised by** the successive steps:
g) Defining a colour value axis from a unique colour value as the starting point to a second unique colour value as the end point, while simultaneously defining the reference points between the two colour values,
h) Determining the target values for the starting point, the end point and the reference points,
i) Determining the actual values for the starting point, the end point and the reference points,
j) Determining a distance value representing the distance between the target value and the actual value for each of the start points, end points and support points,
k) Calculating and outputting a conformity factor in the form of percentage values as a statistical mean value from the distance values.

2. Method according to claim 1, **characterised in that** that the start and end points of both the target values and the actual values are brought into alignment by standardisation, resulting in a transformation rule, and the reference points of both the target values and the actual values are subjected to the same transformation, whereby the resulting distances of the actual values from the target values of the reference points are used as distance values to determine the conformity factor.

3. Method according to at least one of the preceding claims, **characterised in that** a plurality of colour axes are defined for a printed product and processed according to steps h) to k).

4. Method according to claim 3, **characterised in that** a resulting factor is formed statistically from a plurality of conformity factors.

5. Method according to at least one of the preceding claims, **characterised in that** a printed product is selected which comprises the process colours CMYK.

6. Method according to at least one of the preceding claims, **characterised in that** a printed product is selected which has a spectrum of a special colour.

7. Method according to at least one of the preceding claims, **characterised in that** the determined matching factors are stored in a database in a retrievable form together with the information about the printing process, the number of colours and colour selection, and the respective data processing method for preparing the print values.

8. Method according to claim 7, **characterised in that**, for a planned printing project, a suitable data processing method for preparing the print values is selected by evaluating the database information.

## Revendications

1. Procédé pour déterminer un facteur de concordance concernant la concordance des couleurs d'un produit imprimé avec des valeurs de consigne prédéfinies pour les couleurs, comprenant les étapes suivantes :
a) détermination des valeurs de consigne pour les couleurs du produit imprimé à imprimer dans un espace colorimétrique défini dans un processus d'impression source,
b) identification de l'ensemble de données d'impression prédéfini pour un processus d'impression cible basé sur des paramètres d'impression modifiés par rapport au processus d'impression source,
c) transformation de l'ensemble de données d'impression pour le produit imprimé à imprimer en vue de son utilisation dans le processus d'impression cible à l'aide d'un procédé de transformation défini,
d) création d'une impression du produit imprimé avec des champs de mesure de cette impression dans le processus d'impression cible,
e) mesure spectrale des champs de mesure de l'impression selon d) pour enregistrer les valeurs réelles,
f) comparaison des valeurs de consigne avec les valeurs réelles,
1. **caractérisé par** les étapes successives suivantes :
g) définition d'un axe de valeur chromatique à partir d'une valeur chromatique unique comme point de départ vers une deuxième valeur chromatique unique comme point final, avec définition simultanée des points d'appui situés entre les deux valeurs chromatiques,
h) détermination des valeurs de consigne pour le point de départ, le point final et les points d'appui,
i) détermination des valeurs réelles pour le point de départ, le point final et les points d'appui,
j) Détermination d'une valeur d'écart représentant l'écart entre la valeur de consigne et la valeur réelle pour chacun des points de départ, des points d'arrivée et des points d'appui,
k) Calcul et édition d'un facteur de concordance sous forme de pourcentage en tant que moyenne statistique des valeurs d'écart.

2. Procédé selon la revendication 1, **caractérisé en ce que en ce que** les points de départ et d'arrivée des valeurs de consigne et des valeurs réelles sont mis en correspondance par une normalisation, ce qui donne lieu à une règle de transformation, et les points d'appui des valeurs de consigne et des valeurs réelles sont soumis à la même transformation, les écarts résultants entre les valeurs réelles et les valeurs de consigne des points d'appui étant utilisés comme valeurs d'écart pour déterminer le facteur de concordance.

3. Procédé selon au moins l'une des revendications précédentes, **caractérisé en ce que** pour un produit imprimé, une pluralité d'axes de couleur sont définis et traités selon les étapes h) à k).

4. Procédé selon la revendication 3, **caractérisé en ce qu'**un facteur résultant est formé statistiquement à partir d'une pluralité de facteurs de concordance.

5. Procédé selon au moins l'une des revendications précédentes, **caractérisé en ce qu'**on choisit comme produit imprimé un produit qui comprend les couleurs primaires CMYK.

6. Procédé selon au moins l'une des revendications précédentes, **caractérisé en ce qu'**on choisit comme produit imprimé un produit qui présente un spectre d'une couleur spéciale.

7. Procédé selon au moins l'une des revendications précédentes, **caractérisé en ce que** les facteurs de concordance déterminés sont enregistrés dans une base de données accessible avec les informations sur le procédé d'impression, le nombre de couleurs et le choix des couleurs ainsi que le procédé de traitement des données correspondant pour la préparation des valeurs d'impression.

8. Procédé selon la revendication 7, **caractérisé en ce que**, pour un projet d'impression prévu, la sélection d'un procédé de traitement des données approprié pour le traitement des valeurs d'impression s'effectue par l'évaluation des informations contenues dans la base de données.
